Europäisches Patentamt

European Patent Office

Office européen des brevets

(19)

(11) Veröffentlichungsnummer: **0 444 729 A1**

## (12) EUROPÄISCHE PATENTANMELDUNG

(21) Anmeldenummer: 91200182.3

(22) Anmeldetag: 30.01.91

(51) Int. Cl.5: **C01B 17/04, B01D 53/36**

(30) Priorität: 21.02.90 DE 4005378

(43) Veröffentlichungstag der Anmeldung:
04.09.91 Patentblatt 91/36

(84) Benannte Vertragsstaaten:
**DE ES FR GB IT**

(71) Anmelder: **METALLGESELLSCHAFT Aktiengesellschaft Reuterweg 14 W-6000 Frankfurt am Main(DE)**

(72) Erfinder: **Lell, Rainer Marköbeler Strasse 16 W-6369 Nidderau 5(DE)**

(54) **Verfahren zum Regeln der einer Clausanlage zuzuführenden Sauerstoffmenge.**

(57) $H_2S$-haltiges Einsatzgas wird mit sauerstoffhaltigem Gas in einer Brennkammer einer Clausanlage teilweise verbrannt, wobei ein $H_2S$ und $SO_2$ enthaltendes Gasgemisch entsteht, aus welchem man durch Umsetzen von $H_2S$ mit $SO_2$ Elementarschwefel erzeugt. Die Umsetzung des aus der Brennkammer kommenden Gasgemisches erfolgt in einer oder mehreren katalytischen Verfahrensstufen und ggf. in einer Nachbehandlung. Vor oder hinter einer der katalytischen Verfahrensstufen oder vor, innerhalb oder hinter der Nachbehandlung mißt man die Konzentrationen von $H_2S$ und $SO_2$ im Gasgemisch und man mißt ferner die Menge des in die Brennkammer strömenden Einsatzgases und die Menge des der Brennkammer zugeführten sauerstoffhaltigen Gases. In einem Steuergerät berechnet man daraus die der Brennkammer zuzuführende Menge an sauerstoffhaltigem Gas, um ein an Schwefelverbindungen möglichst armes Abgas zu erreichen.

EP 0 444 729 A1

Die Erfindung betrifft ein Verfahren zum Betreiben einer Anlage zum Gewinnen von Elementarschwefel, in welcher $H_2S$-haltiges Einsatzgas mit sauerstoffhaltigem Gas in einer Brennkammer einer Clausanlage teilweise verbrannt und ein $H_2S$ und $SO_2$ enthaltendes Gasgemisch erzeugt wird, aus welchem man durch Umsetzen von $H_2S$ mit $SO_2$ Elementarschwefel erzeugt und abtrennt, wobei die Umsetzung des aus der Brennkammer kommenden Gasgemisches in einer oder mehreren katalytischen Verfahrensstufen und gegebenenfalls in einer Nachbehandlung erfolgt.

In Clausanlagen wird in bekannter Weise $H_2S$-haltiges Gas durch teilweises Verbrennen zu einem $H_2S$-$SO_2$-Gasgemischumgewandelt und daraus nach der vereinfachten Reaktionsgleichung $2H_2S + SO_2 = 3S + 2H_2O$ Elementarschwefel erzeugt. Einzelheiten des Verfahrens sind in der deutschen Offenlegungsschrift 34 15 722 und im dazu korrespondierenden US-Patent 4 632 819 sowie in Ullmanns Encyklopädie der technischen Chemie, 4. Auflage (1982), Band 21, Seiten 8-26 beschrieben. Die katalytischen Verfahrensstufen der Clausanlage arbeiten mit Katalysatoren, die üblicherweise im wesentlichen aus Aluminiumoxid oder Titandioxid bestehen. Üblicherweise wird das aus der Clausanlage kommende Gasgemisch einer Nachbehandlung unterzogen, um den Gehalt an Schwefelverbindungen und insbesondere $H_2S$ und $SO_2$ im Gasgemisch weiter zu reduzieren. Bei bekannten Verfahren der Nachbehandlung erfolgt die Bildung von Elementarschwefel durch Umsetzen von $H_2S$ mit $SO_2$ oder $O_2$ über Katalysatoren, die ebenfalls im wesentlichen aus $Al_2O_3$ oder $TiO_2$ bestehen. Durch die Nachbehandlung entsteht ein Gasgemisch, dessen summierter Restgehalt an $H_2S$ und $SO_2$ etwa im Bereich von 500 bis 1500 ppm liegt. Dieses Gas kann verbrannt und in die Atmosphäre geleitet werden.

Der Erfindung liegt die Aufgabe zugrunde, die der Brennkammer der Clausanlage zuzuführende Menge an Sauerstoff auf möglichst einfache Weise ausreichend genau zu regeln. Erfindungsgemäß erfolgt dies beim eingangs genannten Verfahren dadurch, daß man vor oder hinter einer der katalytischen Verfahrensstufen oder vor, innerhalb oder hinter der Nachbehandlung die Konzentrationen von $H_2S$ und $SO_2$, K und P, im Gasgemisch mißt, daß man die Menge des in die Brennkammer strömenden Einsatzgases und die Menge des der Brennkammer zugeführten sauerstoffhaltigen Gases mißt, daß man das Ergebnis dieser Messungen einem Steuergerät einspeist und daraus die Korrekturmenge an sauerstoffhaltigem Gas berechnet, die erforderlich ist, um die Differenz $D = K - a \cdot P$ auf Null zu bringen, wobei a ein verfahrensabhängiger Faktor zwischen 0,1 und 10 ist, und daß man die in die Brennkammer strömende Menge an sauerstoffhaltigem Gas um die Korrekturmenge ändert.

Eine Weiterbildung der Erfindung besteht darin, daß man die in die Brennkammer strömende Menge an sauerstoffhaltigem Gas aus einer Hauptmenge und einer Restmenge bildet, die Hauptmenge und die Restmenge über die Messung der Menge des Einsatzgases regelt und die Restmenge um die berechnete Korrekturmenge vergrößert oder verkleinert.

Vorzugsweise berechnet man die Korrekturmenge L (in $Nm^3/h$) an sauerstoffhaltigem Gas nach der Formel

$$L = \frac{D}{S}(V \cdot M + 0{,}5 \cdot E),$$

dabei bedeutet

V = verfahrensspezifischer Faktor, der zwischen 0,01 und 2,0 liegt,
D = Konzentrationsdifferenz $K - a \cdot p$, gemessen in mol-%,
E = Menge an Einsatzgas, gemessen in $Nm^3/h$,
S = Prozentsatz (mol-%) an Sauerstoff im sauerstoffhaltigen Gas,
M = Gesamtmenge (gemessen in $Nm^3/h$) des der Brennkammer zugeführten sauerstoffhaltigen Gases.

Der zur Differenz $D = K - a \cdot P$ gehörende verfahrensabhängige Faktor a ergibt sich aus dem gewünschten Verhältnis der Konzentrationen von $H_2S$ und $SO_2$, $a = K/P$, das man in dem durch das Analysengerät, das die Konzentrationen mißt, strömenden Gas als optimal betrachtet. Der Faktor a hängt damit von der auf die Konzentrationsmessung folgenden Behandlung ab. Falls man $H_2S$ und $SO_2$ auch nach der Konzentrationsanalyse über die Reaktion $SO_2 + 2H_2S$ zu Elementarschwefel umsetzen will, ist $a = 2$. Der verfahrensspezifische Faktor V wird im Probebetrieb der Anlage ermittelt. Führt man der Brennkammer sauerstoffhaltiges Gas in Form von reiner Luft zu, so ist $S = 21$ und führt man die Verbrennung in der Brennkammer mit reinem Sauerstoff durch, so ist $S = 100$.

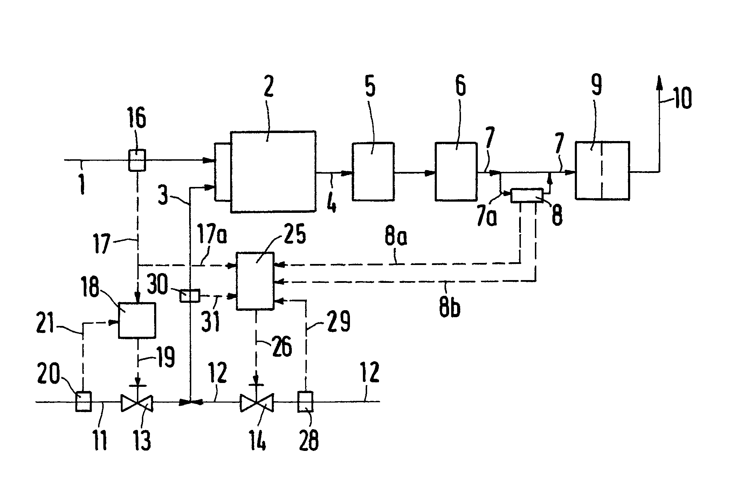

Einzelheiten der erfindungsgemäßen Regelung werden mit Hilfe des in der Zeichnung dargestellten Verfahrensbeispiels erläutert.

Das zu entschwefelnde, $H_2S$-haltige Einsatzgas wird in der Leitung (1) herangeführt und in die Brennkammer (2) einer Clausanlage eingespeist. In der Leitung (3) wird sauerstoffhaltiges Gas herangeführt. Zur Clausanlage gehören üblicherweise mehrere katalytische Verfahrensstufen, in welchen aus dem in der Leitung (4) aus der Brennkammer (2) kommenden Gasgemisch gemäß der (vereinfachten) Reaktionsgleichung $2H_2S + SO_2 = 3S + 2H_2O$ Elementarschwefel erzeugt wird. Der Schwefel wird in bekannter, hier nicht näher dargestellter Weise abgetrennt. In der Zeichnung sind zwei katalytische Verfahrensstufen (5) und (6) dargestellt. Das aus der Brennkammer (2) kommende Gasgemisch, aus dem bereits ein Teil des gebildeten Elementarschwefels durch Kondensation abgetrennt sein kann, strömt nacheinander durch die katalytischen Verfahrensstufen (5) und (6) und gelangt dann in der Leitung (7) zu einem Analysengerät (8), das sich in einer Zweigleitung (7a) befindet.

Im Analysengerät (8) stellt man fest, welche Konzentrationen K und P an $H_2S$ und $SO_2$ im ankommenden Gasgemisch vorliegen, bevor man das Gasgemisch der Nachbehandlung (9) zuführt. In der Nachbehandlung wird der Gehalt an Schwefelverbindungen im Gasgemisch weiter verringert. Die Nachbehandlung, die nicht in allen Fällen notwendig ist, kann in bekannter Weise erfolgen, sie kann mehrteilig oder mehrstufig ausgebildet sein. Anschließend leitet man das Gasgemisch durch eine Nachverbrennung und dann durch den Kamin (10) in die Atmosphäre.

Das sauerstoffhaltige Gas der Leitung (3) setzt sich aus einer in der Leitung (11) herangeführten Hauptmenge und einer aus der Leitung (12) kommenden Restmenge an diesem Gas zusammen. Die Mengenregelung erfolgt durch die Regelventile (13) und (14). Zur Regelung der Hauptmenge in der Leitung (11) mißt man die Menge an Einsatzgas in der Leitung (1) mit Hilfe des Durchflußmeßgeräts (16) und gibt das Mengensignal durch die Signalleitung (17) einem ersten Steuergerät (18) auf, welches durch die Signalleitung (19) auf das Regelventil (13) einwirkt. Über die Signalleitung (17a) wird einem zweiten Steuergerät (25) das gleiche Mengensignal aufgegeben, um damit die Restmenge an sauerstoffhaltigem Gas über das Regelventil (14) einzustellen. Das Durchflußmeßgerät (20) in der Leitung (11) teilt dem Steuergerät (18) über die Signalleitung (21) die tatsächliche Durchflußmenge in der Leitung (11) mit.

Während über das erste Steuergerät (18) die Hauptmenge des der Brennkammer (2) zugeführten sauerstoffhaltigen Gases geregelt wird, dient das zweite Steuergerät (25) auch dazu, durch Verändern der aus der Leitung (12) kommenden Restmenge an sauerstoffhaltigem Gas die in der Brennkammer (2) erforderliche Menge an Sauerstoff genau einzustellen. Das Steuergerät (25) beeinflußt durch die Signalleitung (26) das Regelventil (14). Um zu ermitteln, um welche Korrekturmenge L die Restmenge an sauerstoffhaltigem Gas zu verändern ist, wird diese Korrekturmenge im Steuergerät (25) berechnet. Die Berechnung der Korrekturmenge L erfolgt nach der Formel

$$L = \frac{D}{S}(V \quad M + 0{,}5 E),$$

deren einzelne Faktoren bereits erläutert wurden. Für die Berechnung der Korrekturmenge L gibt man dem zweiten Steuergerät (25) vom Analysengerät (8) durch die Signalleitung (8a) die Konzentration K von $H_2S$ und durch die Signalleitung (8b) die Konzentration P von $SO_2$ in dem durch das Analysengerät strömenden Gasgemisch auf. Die Gesamtmenge M an sauerstoffhaltigem Gas, die in der Leitung (3) zur Brennkammer (2) strömt, wird durch das Meßgerät (30) festgestellt und der Meßwert gelangt durch die Signalleitung (31) zum Steuergerät (25). Das Durchflußmeßgerät (28) in der Leitung (12) teilt über die Signalleitung (29) dem Steuergerät (25) mit, welche Menge an sauerstoffhaltigem Gas tatsächlich durch die Leitung (12) strömt.

Das Analysengerät (8), das die Konzentrationen von $H_2S$ und $SO_2$ im Gasgemisch mißt, kann abweichend von dem in der Zeichnung dargestellten Verfahrensbeispiel an verschiedenen Stellen angeordnet sein. Die Konzentrationsanalyse kann vor oder hinter einer der katalytischen Verfahrensstufen (5,6) sowie auch vor, innerhalb oder hinter einer zur Nachbehandlung (9) gehörenden Verfahrensstufe erfolgen. In der in der Zeichnung dargestellten Verfahrensvariante befindet sich das Analysengerät (8) hinter der letzten katalytischen Stufe (6) der Clausanlage.

Beispiel

In einer der Zeichnung entsprechenden Verfahrensführung wird $H_2S$-haltiges Einsatzgas mit der Zusammensetzung

| | |
|---|---|
| $H_2S$ | 70,0 mol-% |
| $H_2O$ | 5,7 mol-% |
| $CO_2$ | 23,3 mol-% |
| $C_2H_6$ | 1,0 mol-% |

in einer Menge von 8520 Nm³/h in die Brennkammer (2) eingespeist und dort mit 13930 Nm³/h Luft aus der Leitung (3) teilweise verbrannt. Die Hauptmenge der Luft, 12510 Nm³/h, kommt aus der Leitung (11), die Restmenge, 1420 Nm³/h, aus der Leitung (12). Die Clausanlage arbeitet mit zwei katalytischen Stufen (5) und (6) mit $Al_2O_3$-Katalysator. Das Analysengerät (8) mißt eine Konzentration K an $H_2S$ von 0,84 mol-% und eine Konzentration P an $SO_2$ von 0,42 mol-%, der gewünschte Faktor a des Verhältnisses K/P ist 2,0.

Nach einer Änderung der $H_2S$-Konzentration im Einsatzgas der Leitung (1) auf 72 mol-% stellt das Analysengerät (8) Werte von K = 1,49 mol-% und von P = 0,32 mol-% fest. Mit einem Faktor a = 2, S = 21 und einem im Probebetrieb ermittelten Faktor V = 0,412 berechnet das Steuergerät (25) die Korrekturluftmenge wie folgt:

$$L = \frac{0,85}{21} \ (0,412 \ \cdot \ 13930 + 0,5 \ \cdot \ 8520) = 404 \ Nm^3/h.$$

Um diese Menge wird durch Einstellen des Regelventils (14) die Luftmenge in den Leitungen (12) und (3) erhöht. Als Folge davon stellt sich in der Leitung (7) wieder eine $H_2S$-Konzentration von 0,84 mol-% und eine $SO_2$-Konzentration von 0,418 mol-% ein, was ausreichend genau dem gewünschten Verhältnis a = K/P = 2 entspricht.

Die Nachbehandlung (9) nach dem Sulfreen-Verfahren der Lurgi GmbH, Frankfurt, erfolgt an einem $Al_2O_3$-Katalysator, wobei man $2H_2S + SO_2$ zu $2H_2O + \frac{3}{x} S_x$ umsetzt. Im nachbehandelten Gas findet man noch 600 ppm $H_2S$ und 300 ppm $SO_2$. Dieses Gas wird unter Zugabe von Brenngas und Luft verbrannt und in die Atmosphäre geleitet.

## Patentansprüche

1. Verfahren zum Betreiben einer Anlage zum Gewinnen von Elementarschwefel, in welcher $H_2S$-haltiges Einsatzgas mit sauerstoffhaltigem Gas in einer Brennkammer einer Clausanlage teilweise verbrannt und ein $H_2S$ und $SO_2$ enthaltendes Gasgemisch erzeugt wird, aus welchem man durch Umsetzen von $H_2S$ mit $SO_2$ Elementarschwefel erzeugt und abtrennt, wobei die Umsetzung des aus der Brennkammer kommenden Gasgemisches in einer oder mehreren katalytischen Verfahrensstufen und gegebenenfalls in einer Nachbehandlung erfolgt, dadurch gekennzeichnet, daß man vor oder hinter einer der katalytischen Verfahrensstufen oder vor, innerhalb oder hinter der Nachbehandlung die Konzentrationen von $H_2S$ und $SO_2$, K und P, im Gasgemisch mißt, daß man die Menge des in die Brennkammer strömenden Einsatzgases und die Menge des der Brennkammer zugeführten sauerstoffhaltigen Gases mißt, daß man das Ergebnis dieser Messungen einem Steuergerät einspeist und daraus die Korrekturmenge an sauerstoffhaltigem Gas berechnet, die erforderlich ist, um die Differenz D = K - a $\cdot$ P auf Null zu bringen, wobei a ein verfahrensabhängiger Faktor zwischen 0,1 und 10 ist, und daß man die in die Brennkammer strömende Menge an sauerstoffhaltigem Gas um die Korrekturmenge ändert.

2. Verfahren nach Anspruch 1, dadurch gekennzeichnet, daß man die in die Brennkammer strömende Menge an sauerstoffhaltigem Gas aus einer Hauptmenge und einer Restmenge bildet, die Hauptmenge und die Restmenge über die Messung der Menge des Einsatzgases regelt und die Restmenge um die berechnete Korrekturmenge vergrößert oder verkleinert.

3. Verfahren nach Anspruch 2, dadurch gekennzeichnet, daß man die Korrekturmenge L (in $Nm^3/h$) nach der Formel

$$L = \frac{D}{S} (V \cdot M + 0,5 \ E)$$

berechnet, dabei bedeutet
V = verfahrensspezifischer Faktor, der zwischen 0,01 und 2,0 liegt,
D = Konzentrationsdifferenz K - a $\cdot$ P, gemessen in mol-%,
E = Menge an Einsatzgas, gemessen in $Nm^3/h$,
S = Prozentsatz (mol-%) an Sauerstoff im sauerstoffhaltigen Gas,
M = Gesamtmenge (gemessen in $Nm^3/h$) des der Brennkammer zugeführten sauerstoffhaltigen Gases.

4. Verfahren nach Anspruch 1 oder einem der folgenden, dadurch gekennzeichnet, daß man die Konzentrationen K und P im Gasgemisch hinter der letzten katalytischen Stufe einer Clausanlage mißt.

5. Verfahren nach einem der Ansprüche 1 bis 3, dadurch gekennzeichnet, daß man die Konzentrationen K und P im Gasgemisch vor, innerhalb oder hinter einer auf die Clausanlage folgenden Nachbehandlung mißt.

**Europäisches Patentamt**

# EUROPÄISCHER RECHERCHENBERICHT

Nummer der Anmeldung

## EP 91 20 0182

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 616 241 (SOC. NAT. ELF AQUITAINE) <br> * Seite 1, Zeile 5 - Seite 7, Zeile 19; Abb. 1 * <br> − − − | 1,2,4,5 | C 01 B 17/04 <br> B 01 D 53/36 |
| A | FR-A-2 260 531 (ITT INDUSTRIES INC.) <br> − − − − − | | |

| RECHERCHIERTE SACHGEBIETE (Int. Cl.5) |
|---|
| C 01 B <br> B 01 D |

Der vorliegende Recherchenbericht wurde für alle Patentansprüche erstellt

| Recherchenort | Abschlußdatum der Recherche | Prüfer |
|---|---|---|
| Den Haag | 17 Juni 91 | PYFFEROEN K. |